(19) Europäisches Patentamt
European Patent Office
Office européen des brevets

(11) Veröffentlichungsnummer: **0 192 067**
**B1**

(12) **EUROPÄISCHE PATENTSCHRIFT**

(45) Veröffentlichungstag der Patentschrift: **01.06.88**

(51) Int. Cl.[4]: **C 09 B 62/25**, C 09 B 62/513, D 06 P 1/38

(21) Anmeldenummer: **86100774.8**

(22) Anmeldetag: **22.01.86**

(54) **Disazofarbstoffe.**

(30) Priorität: **02.02.85 DE 3503567**

(43) Veröffentlichungstag der Anmeldung: **27.08.86 Patentblatt 86/35**

(45) Bekanntmachung des Hinweises auf die Patenterteilung: **01.06.88 Patentblatt 88/22**

(84) Benannte Vertragsstaaten: **CH DE FR GB LI**

(56) Entgegenhaltungen: **DE - A - 3 113 473**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Jäger, Horst, Dr., Carl-Rumpff-Strasse 37, D-5090 Leverkusen 1 (DE)**
Erfinder: **Herd, Karl Josef, Dr., Am Gartenfeld 66, D-5068 Odenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die vorliegende Erfindung betrifft neue Disazoreaktivfarbstoffe, die in Form der freien Säure der Formel (1) entsprechen

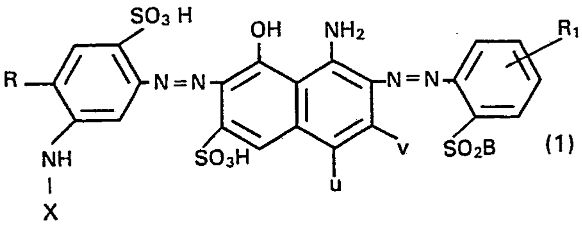

(1)

worin

R = H, $CH_3$,

$R_1$ = H, Halogen, $C_1$-$C_4$-Alkyl, $C_1$-$C_4$-Alkoxy, $NO_2$, COOH, $SO_3H$,

B = $-CH=CH_2$, $-CH_2CH_2Z$, worin Z eine abspaltbare Gruppe bedeutet,

X = Rest einer Reaktivkomponente der Pyrimidinreihe, der mindestens ein reaktives Fluoratom enthält,

u, v = H, $SO_3H$, wobei u ≠ v; Beispiele für Z sind: $OSO_3H$, $OPO_3H_2$, $S_2O_3H$, Cl, Br, $O\overset{\overset{\displaystyle O}{\|}}{C}CH_3$.

Geeignete Pyrimidinreste X, die mindestens einen unter Färbebedingungen abspaltbaren Fluorsubstituenten enthalten, sind beispielsweise folgende:

2-Fluor-4-pyrimidinyl-, 6-Fluor-2,5-dichlor-4-pyrimidinyl-, 2,6-Difluor-4-pyrimidinyl-, 2,6-Difluor-5-chlor-4-pyrimidinyl, 2-Fluor-5,6-dichlor-4-pyrimidinyl, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methyl-sulfonyl-4-pyrimidinyl-, 2-Fluor-4-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-cyan-pyrimidinyl-, 2,6-Difluor-5-methyl-sulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl, 6-Fluor-5-chlor-pyrimidinyl-4, 6-Fluor-5-trifluormethyl-pyrimidinyl-4, 6-Fluor-2-methyl-pyrimidinyl-4, 6-Fluor-5-chlor-2-methyl-pyrimidinyl-4, 5,6-Difluorpyrimidinyl-4, 6-Fluor-5-chlor-2-trifluormethyl-pyrimidinyl-4, 6-Fluor-2-phenyl-pyrimidinyl-4, 6-Fluor-5-cyan-pyrimidinyl-4, 6-Fluor-5-nitro-pyrimidinyl-4, 6-Fluor-5-methyl-methylsulfonyl-pyrimidinyl-4, 6-Fluor-5-phenyl-sulfonyl-pyrimidinyl-4.

Im Rahmen der Formel (1) sind diejenigen Farbstoffe bevorzugt, worin

R und $R_1$ = H,

Z = $OSO_3H$,

u = H,

v = $SO_3H$ und

X für einen der folgenden Pyrimidinreste steht:

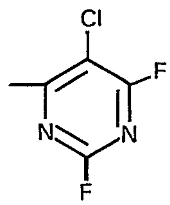 , 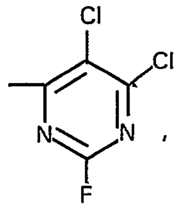 , 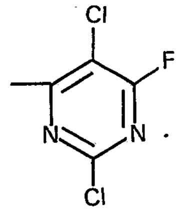 .

Ein Verfahren zur Herstellung von Farbstoffen der Formel (1) ist dadurch gekennzeichnet, dass man ein Amin der Formel

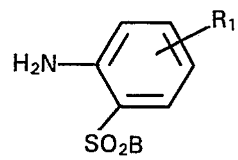

(2)

diazotiert, mit einer 8-Amino-1-oxi-naphthalinsulfonsäure der Formel

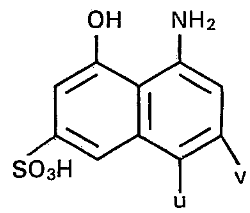

(3)

zu einer Verbindung der Formel

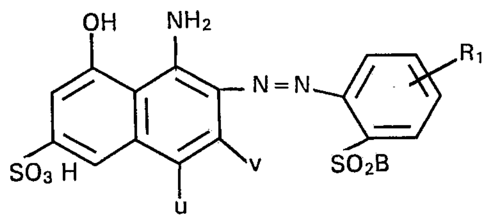

(4)

im sauren Medium kuppelt, und diesen Monoazofarbstoff mit der aus einem Amin der Formel

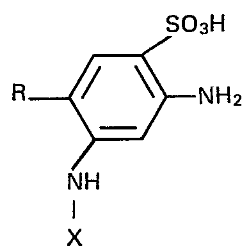

(5)

hergestellten Diazoniumverbindung im neutralen Medium zu einem Farbstoff der Formel (1) kuppelt.

Die Verbindungen der Formel (5) erhält man durch Kondensation von Diaminen der Formel

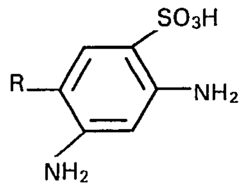

(6)

mit einer mindestens durch zwei Fluoratome substituierten Pyrimidinverbindung der Formel

F - X (F = Fluor) (7)

unter Abspaltung von H-F in an sich bekannter Weise.

In den Verbindungen der Formel (2) bis (7) haben R, $R_1$, B, X,u und v die in Formel (1) angegebene Bedeutung. Die Reaktionsbedingungen der Herstellung entsprechen den auf dem Gebiet der Acylierung, Diazotierung und Kupplung üblichen Bedingungen. So erfolgt die Herstellung vorzugsweise im wässrigen Medium.

Als Ausgangsverbindung zur Herstellung der Reaktivfarbstoffe der Formel (1) können beispielsweise genannt werden:

a) Kupplungskomponenten der Formel (3)

1-Amino-8-hydroxynaphthalin-3,6-disulfonsäure (H-Säure),

1-Amino-8-hydroxynaphthalin-4,6-disulfonsäure (K-Säure),

b) Diazokomponenten der Formel (2)

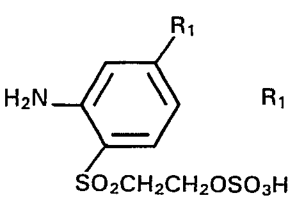

$R_1$ = H, Cl, $SO_3H$ oder $NO_2$

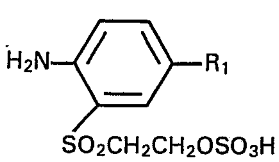

$R_1$ = Cl oder $SO_3H$

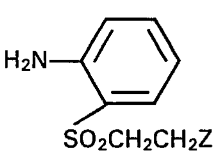

Z = $OPO_3H_2$, $S_2O_3H$ oder Cl

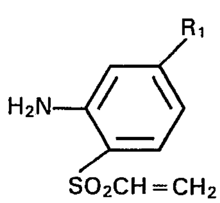

$R_1$ = H, Cl oder $SO_3H$

c) Diamine der Formel (6)

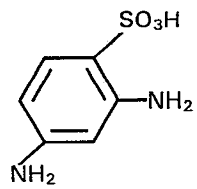

und

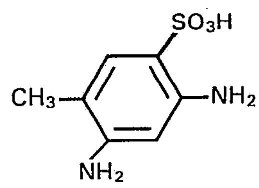

d) Pyridine der Formel (7)

2,4-Difluor-6-methylpyrimidin, 2,6-Difluor-4-methyl-5-chlorpyrimidin, 2,4-Difluor-pyrimidin-5-ethylsulfon, 2,6-Difluor-4-chlorpyrimidin, 2,4,6-Trifluor-5-chlor-pyrimidin, 2,6-Difluor-4-methyl-5-brompyrimidin, 2,4-Difluor-5,6-dichlor- oder -dibrompyrimidin, 4,6-Difluor-2,5-dichlor- oder -dibrompyrimidin, 2,6-Difluor-4-brompyrimidin, 2,4,6-Trifluor-5-brompyrimidin, 2,4,6-Trifluor-5-chlormethylpyrimidin, 2,4,6-Trifluor-5-nitropyrimidin, 2,4,6-Trifluor-5-cyanpyrimidin, 2,4,6-Trifluorpyrimidin-5-carbonsäurealkylester oder -5-carbonsäureamide, 2,6-Difluor-5-methyl-4-chlorpyrimidin, 2,6-Difluor-5-chlorpyrimidin, 2,4,6-Trifluor-5-methylpyrimidin, 2,4-Difluor-5-nitro-chlorpyrimidin, 2,4-Difluor-5-cyanpyrimidin, 2,4-Difluor-5-methylpyrimidin, 6-Trifluormethyl-5-chlor-2,4-difluorpyrimidin, 6-Phenyl-2,4-difluorpyrimidin, 6-Trifluormethyl-2,4-difluorpyrimidin, 5-Trifluormethyl-2,4,6-trifluorpyrimidin, 2,4-Difluor-5-nitro-pyrimidin, 2,4-Difluor-5-trifluormethylpyrimidin, 2,4-Difluor-5-methylsulfonyl-pyrimidin, 2,4-Difluor-5-phenyl-pyrimidin, 2,4-Difluor-5-carbonamido-pyrimidin, 2,4-Difluor-5-carbomethoxy-pyrimidin, 2,4-Difluor-6-trifluormethylpyrimidin, 2,4-Difluor-6-carbonamido-pyrimidin, 2,4-Difluor-6-carbomethoxypyrimidin, 2,4-Difluor-6-phenyl-pyrimidin, 2,4-Difluor-6-cyanpyrimidin, 2,4,6-Trifluor-5-methylsulfonylpyrimidin, 2,4-Difluor-5-chlor-6-carbomethoxy-pyrimidin, 5-Trifluormethyl-2,4-difluorpyrimidin, 4,6-Difluor-5-chlorpyrimidin, 4,6-Difluor-5-trifluormethyl-pyrimidin, 4,6-Difluor-2-methyl-pyrimidin, 4,6-Difluor-5-chlor-2-methyl-pyrimidin, 4,5,6-Trifluor-pyrimidin, 4,6-Difluor-5-chlor-2-trifluormethyl-pyrimidin, 4,6-Difluor-2-phenyl-pyrimidin, 4,6-Difluor-5-cyan-pyrimidin, 4,6-Difluor-5-nitro-pyrimidin, 4,6-Difluor-5-methylsulfonyl-pyrimidin, 4,6-Difluor-5-phenyl-sulfonyl-pyrimidin.

Die Reaktivfarbstoffe der Formel (1) können isoliert und zu brauchbaren,trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d.h. ohne Zwischenisolierung der Farbstoffe herstellen.

Die Reaktivfarbstoffe der Formel (1) zeichnen sich durch hohe Reaktivität aus, und sie ergeben Färbungen mit guten Nass- und Lichtechtheiten. Besonders hervorzuheben ist es, dass die Farbstoffe eine gute

Löslichkeit und Elektrolytlöslichkeit bei guten Ausziehеigenschaften und hoher Farbstoff-Fixierung aufweisen, und dass sich die nicht fixierten Anteile leicht entfernen lassen. Die Färbungen sind ätzbar.

Die neuen Farbstoffe der Formel (1) eignen sich zum Färben und Bedrucken von Hydroxyl- oder Amidgruppen enthaltenden Materialien, wie Textilfasern-, Fäden und Geweben aus Wolle, Seide synthetischen Polyamid-, und Polyurethanfasern und zum waschechten Färben und Bedrucken von nativer oder regenerierter Cellulose, wobei die Behandlung von Cellulosematerialien zweckmässigerweise in Gegenwart säurebindender Mittel und gegebenenfalls durch Hitzeeinwirkung nach den für Reaktivfarbstoffe bekanntgewordenen Verfahren erfolgt.

Die angegebenen Formeln sind die der entsprechenden freien Säure. Die Farbstoffe wurden im allgemeinen in Form der Alkalisalze, insbesondere der Na-Salze isoliert und zum Färben eingesetzt.

Die in den Beispielen genannten Gewichte beziehen sich auf die freie Säure. Die in den Beispielen angegebenen Farbkennzahlen beziehen sich auf Colour Index Hue Indication Chart (Indicator Numbers).

*Beispiel 1*

61,1 g des Farbstoffs der Formel

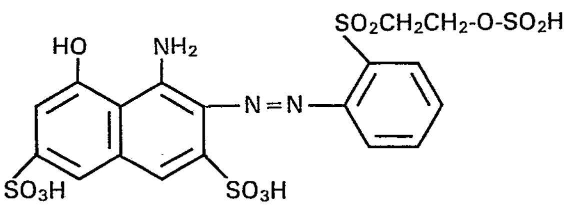

werden bei pH 6 bis 7 mit der Diazoniumverbindung aus 33,7 g des Kondensationsproduktes von 18,8 g 1,3-Diaminobenzol-6-sulfonsäure mit 17 g 2,4,6--Trifluor-5-chlor-pyrimidin zu einem dunkelblauen Farbstoff gekuppelt. Nach Aussalzen, Isolieren, Trocknen und Mahlen fällt der Farbstoff der Formel

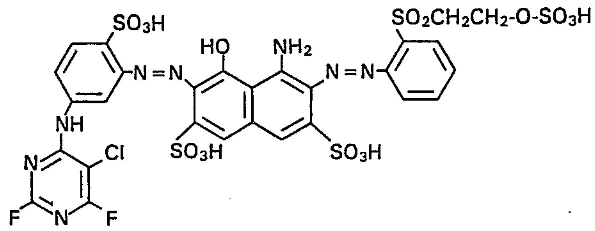

als dunkles Pulver an, der sich in Wasser mit blauer Farbe löst und Baumwolle in rotstichig marineblauen (38) bis schwarzen Tönen färbt.

Wenn man nach der geschilderten Arbeitsweise verfährt und als Ausgangsprodukt für die Diazoniumverbindung die Kondensationsprodukte verwendet, die aus den in Spalte 2 genannten Diaminobenzolsulfonsäuren und den in Spalte 3 aufgeführten Pyrimidinen erhältlich sind, und als Monoazofarbstoffe, die bei pH 6 bis 7 ankuppelbar sind, die in Spalte 4 beschriebenen Verbindungen einsetzt, so erhält man gleichfalls Reaktivfarbstoffe, die Baumwolle in den in Spalte 5 genannten Tönen färben (in Klammer: Colour Index hue-number).

Pyrimidine
A 2,4,6-Trifluor-5-chlor-pyrimidin
B 2,4-Difluor-5,6-dichlor-pyrimidin
C 2,4-Difluor-5-chlor-6-methyl-pyrimidin
D 2,4-Difluor-5-chlor-pyrimidin
E 4,6-Difluor-2,5-dichlor-pyrimidin

| Beispiel | Diaminobenzolsulfonsäure | Pyrimidine | Monoazofarbstoffe | Farbton | Farbkennzahl |
|---|---|---|---|---|---|
| 2 | 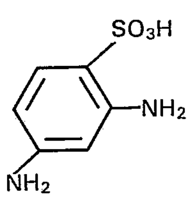 | B | 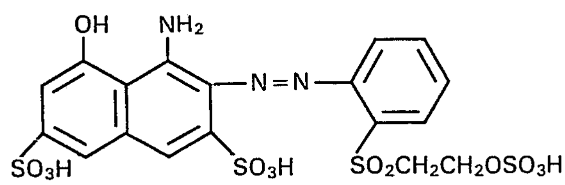 | rotst. marine | 38 |
| 3 | » | C | » | | |
| 4 | » | D | » | | |
| 5 | » | E | » | | |
| 6 | 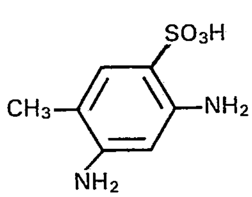 | A | 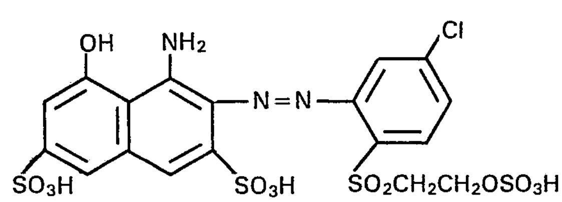 | marine | 28 |

Fortsetzung Tabelle

| Beispiel | Diaminobenzolsulfon-säure | Pyrimi-dine | Monoazofarbstoffe | Farbton | Farb-kennzahl |
|---|---|---|---|---|---|
| 7 | 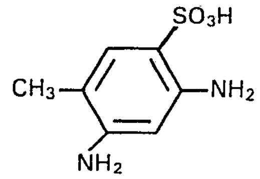 | A | 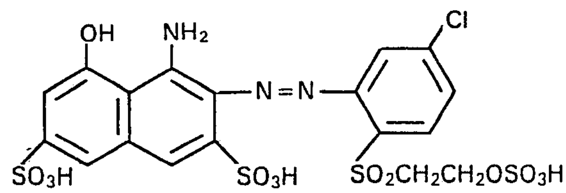 | marine | 28 |

Konstitutionell nächstvergleichbare Farbstoffe, die sich von den erfindungsgemässen Farbstoffen bezüglich der Stellung der Fluorpyrimidinyl-Reaktivgruppe unterscheiden, sind in der DE-A-3 113 473 beschrieben.

## Patentansprüche

1. Disazoreaktivfarbstoffe, die in Form der freien Säure der Formel entsprechen

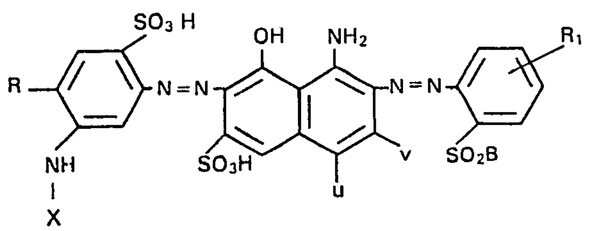

worin
R = H, $CH_3$,
$R_1$ = H, Halogen, $C_1$-$C_4$-Alkyl, $C_1$-$C_4$-Alkoxy, $NO_2$, COOH, $SO_3H$,
B = $-CH=CH_2$, $-CH_2-CH_2-Z$, worin Z eine abspaltbare Gruppe bedeutet,
X = Rest einer Reaktivkomponente der Pyrimidinreihe, der mindestens ein reaktives Fluoratom enthält,
u, v = H, $SO_3H$, wobei $u \neq v$.

2. Farbstoffe des Anspruchs 1 mit Z = $OSO_3H$, $OPO_3H_2$, Cl, Br, $OCOCH_3$, $S_2O_3H$.

3. Farbstoffe der Ansprüche 1 und 2 mit $R_1$ = H, F, Cl, Br, $CH_3$, $C_2H_5$, COOH, $SO_3H$, $OCH_3$, $OC_2H_5$, $NO_2$.

4. Farbstoffe der Ansprüche 1 bis 3 mit X =

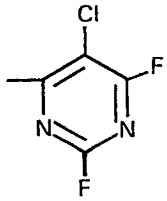 , 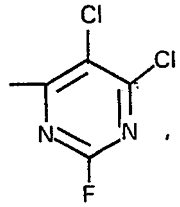 , 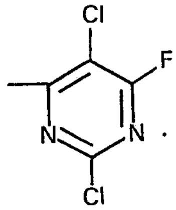 .

5. Farbstoffe des Anspruchs 1 mit R, $R_1$ = H, Z = $OSO_3H$, u = H, v = $SO_3H$ und X =

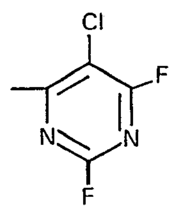 , 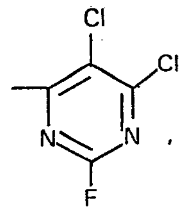 , 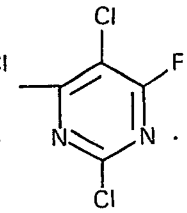 .

6. Verwendung der Farbstoffe der Ansprüche 1 bis 5 zum Färben und Bedrucken von Hydroxylgruppen- oder Amidgruppen-haltigen Materialien.

7. Mit den Farbstoffen der Ansprüche 1 bis 5 gefärbte oder bedruckte Hydroxylgruppen- oder Amidgruppen-haltige Materialien.

## Claims

1. Disazo reactive dyestuffs which, in the form of the free acid, conform to the formula

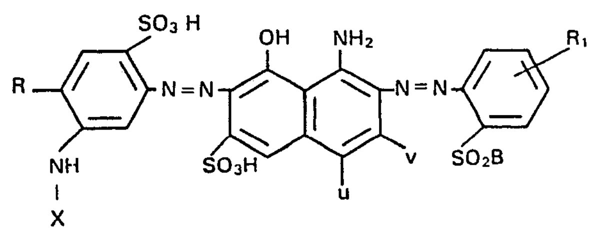

wherein
R = H, $CH_2$,
$R_1$ = H, halogen, $C_1$-$C_4$-alkyl, $C_1$-$C_4$-alkoxy, $NO_2$, COOH, $SO_3H$,
B = $CH=CH_2$, $-CH_2-CH_2-Z$, wherein Z denotes a detachable group,
X = radical of a reactive component of the pyrimidine series which contains at least one reactive fluorine atom,
u, v = H, $SO_3H$, where $u \neq v$.

2. Dyestuffs of Claim 1 where Z = $OSO_3H$, $OPO_3H_2$, Cl, Br, $OCOCH_3$, $S_2O_3H$.

3. Dyestuffs of Claims 1 and 2 where $R_1$ = H, F, Cl, Br, $CH_3$, $C_2O_5$, COOH, $SO_3H$, $OCH_3$, $OC_2H_5$, $NO_2$.

4. Dyestuffs of Claims 1 to 3, where X =

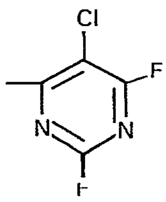 , 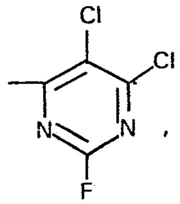 , 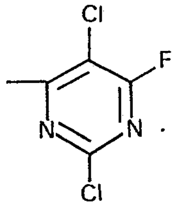 .

5. Dyestuffs of Claim 1 where R, $R_1$ = H, Z = $OSO_3H$, u = H, v = $SO_3H$ and X =

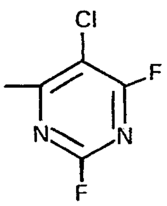 , 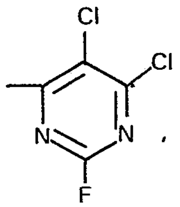 , 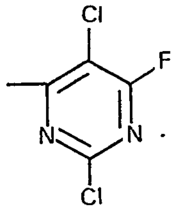 .

6. Use of the dyestuffs of Claims 1 to 5, for dyeing and printing hydroxyl- or carbamoyl-containing materials.

7. Hydroxyl- or carbamoyl-containing materials dyed or printed with the dyestuffs of Claims 1 to 5.

**Revendications**

1. Colorants réactifs dis-azoïques qui, à l'état d'acides libres, répondent à la formule

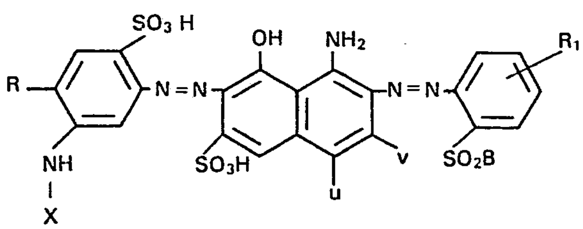

dans laquelle

R = H, $CH_3$,

$R_1$ = H, halogène, alkyle en $C_1$-$C_4$, alcoxy en $C_1$-$C_4$, $NO_2$, COOH, $SO_3H$,

B = $-CH=CH_2$, $-CH_2-CH_2-Z$ dans lequel Z représente un groupe éliminable,

X = radical d'un composant réactif de la série des pyrimidines, contenant au moins 1 atome de fluor réactif,

u, v = H, $SO_3H$, mais u et v sont différents.

2. Colorants de la revendication 1, dans lesquels Z = $OSO_3H$, $OPO_3H_2$, Cl, Br, $OCOCH_3$, $S_2O_3H$.

3. Colorants des revendications 1 et 2, dans lesquels $R_1$ = H, F, Cl, Br, $CH_3$, $C_2H_5$, COOH, $SO_3H$, $OCH_3$, $OC_2H_5$, $NO_2$.

4. Colorants des revendications 1 à 3, dans lesquels X =

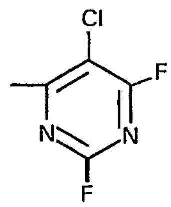 , 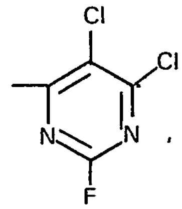 , 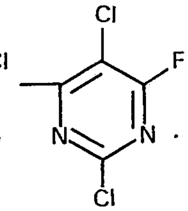 .

5. Colorants de la revendication 1, dans lesquels R, $R_1$, = H, Z = $OSO_3H$, u = H, v = $SO_3H$ et X =

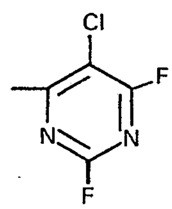 , 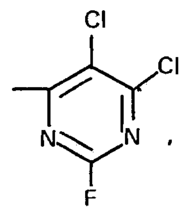 , 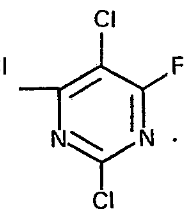 .

6. Utilisation des colorants des revendications 1 à 5 pour la teinture et l'impression de matières contenant des groupes hydroxy ou des groupes amide.

7. Les matières contenant des groupes hydroxy ou amide teintes ou imprimées par les colorants des revendications 1 à 5.